# EUROPÄISCHE PATENTSCHRIFT

(11) **EP 1 964 694 B1**
(45) Veröffentlichungstag und Bekanntmachung des Hinweises auf die Patenterteilung: **18.01.2012**
(21) Anmeldenummer: 07023193.1
(22) Anmeldetag: 30.11.2007
(51) Int. Cl.: B60G 7/00, F16C 11/06

(54) **Gelenk- und/oder Lageranordnung, insbesondere Hülsengelenk zur Anbindung von Radführungselementen eines Fahrzeugs, sowie Verfahren zur Herstellung einer Gelenk- und/oder Lageranordnung**
Joint and/or bearing arrangement, in particular bushing joint for connection of automobile wheel suspension components, as well as method for manufacturing a joint and/or bearing arrangement
Système d'articulation et/ou de palier, en particulier articulation à douille destinée à relier des éléments de guidage de roue d'un véhicule, ainsi que procédé de fabrication d'un système d'articulation et/ou de palier

(30) Priorität: 02.03.2007 DE 102007010812
(43) Veröffentlichungstag der Anmeldung: 03.09.2008
(73) Patentinhaber: AUDI AG, 85045 Ingolstadt (DE)
(72) Erfinder: Hudler, Roland, 85077 Manching (DE); Wagner, Richard, 85092 Kösching (DE); Killian, Friedrich, 85122 Hitzhofen (DE)
(74) Vertreter: Asch, Konrad

(56) Entgegenhaltungen:
- EP-A1- 0 505 719
- EP-A1- 1 662 158
- WO-A1-2007/012324
- DE-A1- 10 250 147
- DE-A1-102004 056 575
- GB-A- 886 571

## Beschreibung

Die Erfindung betrifft eine Gelenk- und/oder Lageranordnung, insbesondere ein Hülsengelenk zur Anbindung von Radführungselementen eines Fahrzeugs nach dem Oberbegriff des Patentanspruches 1.

Herkömmliche Hülsengelenke weisen eine außenseitig kugelförmig gekrümmte Lagerbuchse bzw. ein Lagerinnenteil auf, das über eine ringförmige Lagerschale gleitbeweglich in einem Gelenkgehäuse gelagert ist. Das Gelenkgehäuse kann in einem Radführungselement eingepresst oder in anderer Weise gehaltert sein. Alternativ kann das Radführungselement das Gelenkgehäuse materialeinheitlich und einstückig ausbilden.

Bei solchen Hülsengelenken ist es nachteilig, dass die Lagerschalen über ihre Axialerstreckung mit ungleichmäßiger Schalendicke ausgeführt ist. Dies hat zur Folge, dass eine temperaturbedingte Ausdehnung der Lagerschale in Abhängigkeit von der sich ändernden Schalendicke unterschiedlich ist. Zum Ausgleich dieser unterschiedlich starken Materialausdehnung können im dickeren Teil der Lagerschale Ausdehnungshohlräume vorgesehen werden, was jedoch bei Belastung zu einem Wegfließen des Kunststoffes und damit zu veränderter Steifigkeit oder einer unzulässigen Spielzunahme führen kann. Darüber hinaus ist aufgrund der ungleichmäßigen Lagerschalendicke deren Elastizität je nach Kraftrichtung unterschiedlich.

Zur Vermeidung dieser Nachteile ist aus der DE 10 2004 056 575 A1 eine Gelenk- und/oder Lageranordnung bekannt, bei der die Lagerschale mit gleichmäßiger Materialstärke ausgebildet ist. Zwischen dem Gelenkgehäuse und der Lagerschale ist ein Kraftausgleichselement vorgesehen, das eine auf das Gelenkgehäuse beim Einpressen mit einer radialen Komponente einwirkende Kraft mit Verformung zumindest eines Teilbereichs von der Lagerschale abhält.

Zwischen den Kontaktflächen des Lagerinnenteils und der Lagerschale ist ein Schmiermittel vorgesehen. Hierzu sind an der Innenfläche der Lagerschale Schmiermittelreservoirs ausgebildet, die auf der Lagerschalen-Innenseite eingebracht sind. Das unmittelbare Einbringen solcher Vertiefungen in die Lagerschalen-Innenseite ist problematisch: Zum Einen können sich fertigungsbedingt scharfkantige Übergänge an den Vertiefungen bilden. Zum Anderen ist die Lagerschalen-Innenseite für Werkzeuge zum Einbringen der Vertiefungen nur schwer zugänglich.

Aus der DE 102 50 147 A1 ist eine gattungsgemäße Gelenk- und/oder Lageranordnung bekannt, bei der in dem gehäuseseitigen Lagersitz der Lagerschale sowie in der Lagerschalen-Außenseite jeweils Vertiefungen vorgesehen sind.

Die Aufgabe der Erfindung besteht darin, eine Gelenk- und/oder Lageranordnung, insbesondere ein Hülsengelenk, bereitzustellen, die konstruktiv einfach aufgebaut ist und dauerhaft einen Gelenkausfall verhindert.

Die Aufgabe ist durch die Merkmale des Patentanspruches 1 gelöst. Vorteilhafte Weiterbildungen der Erfindung sind in den Unteransprüchen offenbart.

Gemäß dem kennzeichnenden Teil des Patentanspruches 1 sind in dem gehäuseseitigen Lagersitz für die Lagerschale und/oder in der Lagerschalen-Auβenseite Vertiefungen vorgesehen.

Bei einer herstellungsbedingten Wärmebehandlung, etwa einem Temper-Vorgang, erweicht das Kunststoffmaterial des zusammengebauten Hülsengelenks der Lagerschale des zusammengebauten Hülsengelenks und tritt es in die Vertiefungen des gehäuseseitigen Lagersitzes ein. Insbesondere bei einer gleichmäßig dünnwandig ausgeführten Lagerschale bilden sich als Folge auf der, vom Lagersitz abgewandten Seite der Lagerschale entsprechende Schmierrinnen bzw. Schmiertaschen, die Schmiermittel aufnehmen können.

Die Schmierrinnen bzw. Schmiertaschen können in der Schalenhälfte der Lagerschale gebildet sein, die auf dem Gehäuse-Lagersitz angeordnet ist. Bei gleichmäßig dünnwandigen Lagerschale können die Schmierrinnen mit gleichmäßiger Tiefe ausgeführt werden. Zusätzlich wird mittels des in die gehäuseseitigen Nuten ragenden Kunststoffmaterials der Lagerschale eine zuverlässige Verdrehsicherung zwischen der Lagerschale und dem Gelenkgehäuse erreicht.

Erfindungsgemäß ist zur Halterung der Lagerschale im Gelenkgehäuse eine Lagerschatenhälfte von einem Verschlussring überdeckt, während die andere Lagerschalenhälfte auf einem gehäuseseitigen Lagersitz sitzt. Durch den gehäuseseitigen Lagersitz kann konstruktiv einfach eine passgenaue, nichtelastische Abstützung der einen Lagerschalenhälfte erreicht werden. In Kombination zu dieser nicht-elastischen Abstützung kann der die andere Lagerschalenhälfte stützende Verschlussring elastisch ausgebildet sein. Dadurch wird beim Verbau des Gelenkgehäuses in einem Radführungselement der entstehende Pressdruck durch elastische Verformung ausgeglichen, so dass der auf die Lagerschale übertragene Pressdruck reduziert wird. Bevorzugt können in dem nicht-elastisch ausgeführten Lagersitz des Gelenkgehäuses Nuten, insbesondere Längsnuten, vorgesehen sein.

Für den Fall, dass die Vertiefungen in der Lagerschalen-Außenseite vorgesehen sind, kann bei einer herstellungsbedingten Wärmebehandlung der bereits zusammengebauten Gelenk- und/oder Lageranordnung das Kunststoffmaterial der Lagerschale die Vertiefungen an der Lagerschalen-Außenseite auffüllen. Die Vertiefungen können sich nach dem Temper-Prozess auf der Lagerinnenseite als Schmiermittelreservoirs abbilden und dienen dort der Schmiermittelaufnahme. Bei den erfindungsgemäß auf der Lagerschalen-Innenseite gebildeten Schmierrinnen bzw. -taschen können scharfkantige Übergänge vermieden und weiche Übergänge ohne besonderen Werkzeugeinsatz bereitgestellt werden.

Besonders vorteilhaft ist es, die Vertiefungen als Axialnuten auszubilden, die sich in Längsrichtung der Gelenk- und/oder Lageranordnung erstrecken. Auf diese Weise unterstützen die sich lagerschaleninnenseitig bildenden Schmierrinnen einen Schmiermittel-Transport in Axial- bzw. Längsrichtung, was insbesondere bei überwiegend rotorischer Bewegung des Gelenks vorteilhaft ist. Alternativ hierzu können die Vertiefungen auch als Radialnuten ausgebildet sein, die einen Schmiermittel-Transport in Radialrichtung unterstützen. In einer weiteren Ausführungsform können die Vertiefungen taschenartig ausgeführt sein und in Reihe bzw. versetzt zueinander angeordnet sein.

Bevorzugt kann die ringförmige Lagerschale mit gleichmäßiger Materialstärke ausgebildet sein. Eine temperaturbedingte Materialausdehnung in der Axialrichtung der Lagerschale wird somit vergleichmäßigt. Die Lagerschale kann daher konstruktiv einfach ohne zusätzliche Ausdehnungshohlräume, die im Stand der Technik zum Ausgleich unterschiedlicher Materialausdehnungen erforderlich sind, ausgebildet werden. Außerdem ist aufgrund der gleichmäβigen Materialstärke die Elastizität der Lagerschale unabhängig von einer Wirkrichtung einer auf das Hülsengelenk beaufschlagten Kraft und ist die Lagerschalen-Steifigkeit konstant.

Die Lagerschale kann zur Halterung im Gelenkgehäuse einen außenseitig umlaufenden Halteflansch aufweisen. Der Halteflansch der Lagerschale ist zwischen dem Gelenkgehäuse und dem separaten Verschlussring geklemmt, der in das Gehäuse einpressbar sein kann. Auf diese Weise ist eine zuverlässige Verdrehsicherung zwischen der Lagerschale und dem Gelenkgehäuse erreicht.

Für eine gleichmäßige wärmebedingte Ausdehnung der Lagerschale ist es von Vorteil, wenn der Halteflansch der Lagerschale im Wesentlichen mit gleicher Materialstärke wie die Lagerschale ausgebildet ist. Der Halteflansch ist dabei konstruktiv vorteilhaft axial versetzt zu den beiden Stirnseiten der ringförmigen Lagerschale an deren Außenumfang ausgebildet. Der Verschlussring kann daher einerseits den Halteflansch der Lagerschale gegen einen gehäuseseitigen Ringanschlag drücken und andererseits mit einer weiteren Anlagefläche gegen die Außenseite der Lagerschale drücken.

Besonders bevorzugt ist es, wenn der Halteflansch im Wesentlichen axial mittig zwischen den beiden Lagerschalenhälften der Lagerschale angeordnet ist. Die Lagerschale ist somit im Querschnittsprofil nahezu T-förmig. Bevorzugt kann der Verschlussring eine der beiden Schalenhälften der Lagerschale überdecken und gegen die kugelförmige Lagerbuchse drücken. Die andere Schalenhälfte sitzt erfindungsgemäß großflächig auf einem gehäuseseitigen Lagersitz.

Der Verschlussring kann beispielhaft beim Zusammenbau des Hülsengelenks in das Gelenkgehäuse eingepresst oder auch eingeschraubt werden. Erfindungsgemäß ist der Verschlussring im Querschnitt keilförmig ausgebildet.. Auf diese Weise ist der Verschlussring mit seinen Keilflächen zwischen der Lagerschale und dem Gehäuse verspannt, und zwar unter Bildung eines geringfügigen Ausgleichsspalts zwischen sich und dem Gehäuse. Der Ausgleichsspalt bewirkt, dass bei einem Verbau des Gelenkgehäuses in einem Radführungselement, z. B. einem Einpressen des Gelenkgehäuses in das Radführungselement, der entstehende Pressdruck durch eine aufgrund des Ausgleichsspalts mögliche elastische Bewegung des Hülsengelenks abgebaut werden kann, ohne dass der Pressdruck auf die Lagerschale übertragen wird.

Nachfolgend sind zwei Ausführungsbeispiele der Erfindung anhand der beigefügten Figuren beschrieben.

Es zeigen:
- Fig. 1: in einer Längshalbschnittansicht das Hülsengelenk gemäß dem ersten Ausführungsbeispiel in eingebautem Zustand;
- Fig. 2: einen Ausschnitt des Hülsengelenks in vergrößerter Schnittdarstel- lung; und
- Fig. 3: eine Lagerschale gemäß dem zweiten Ausführungsbeispiel im Teil- schnitt.

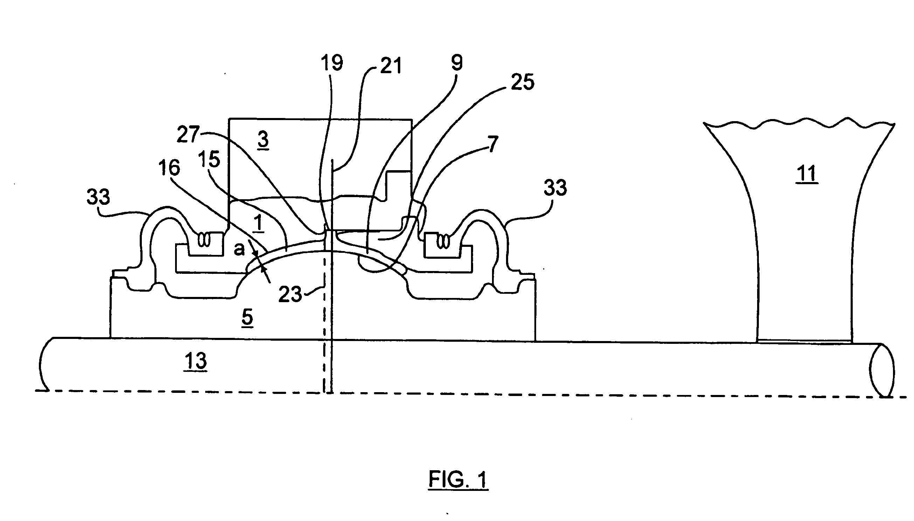

In der Fig. 1 ist die obere Hälfte eines Hülsengelenks in einem im Fahrwerk eines Fahrzeugs eingebauten Zustand gezeigt. Die nicht gezeigte untere Hälfte ist identisch mit der dargestellten oberen Hälfte des Gelenks. Das Hülsengelenk weist ein Gelenkgehäuse 1 auf, das in einem nur angedeuteten Radführungselement 3, etwa einem Radträger, eingepresst oder eingeschraubt ist. Innerhalb des Gelenkgehäuses 1 befindet sich eine Lagerbuchse 5, die außenseitig einen Kugelabschnitt 7 aufweist. Die aus Metall gefertigte Lagerbuchse 5 bzw. das Lagerinnenteil 5 ist mit ihrem Kugelabschnitt 7 über eine ringförmige Kunststoff-Lagerschale 9 gleitbeweglich in dem Gelenkgehäuse 1 gelagert. Die Lagerschale 9 sitzt dabei mit einer Schalenhälfte 15 auf einem komplementären Lagersitz 16 des Gehäuses 1.

Zur gelenkigen Verbindung des Radträgers 3 mit einem nur angedeuteten Fahrwerkslenker 11 ist das Hülsengelenk mit seiner Lagerbuchse 5 auf einen Lagerzapfen 11 aufgesetzt, der in der **Fig. 1** durch eine Bohrung des Fahrwerkslenkers 11 geführt ist. Der Radträger 3 ist somit um den Lagerzapfen 13 drehbeweglich gegenüber dem Fahrwerkslenker 11 gelagert.

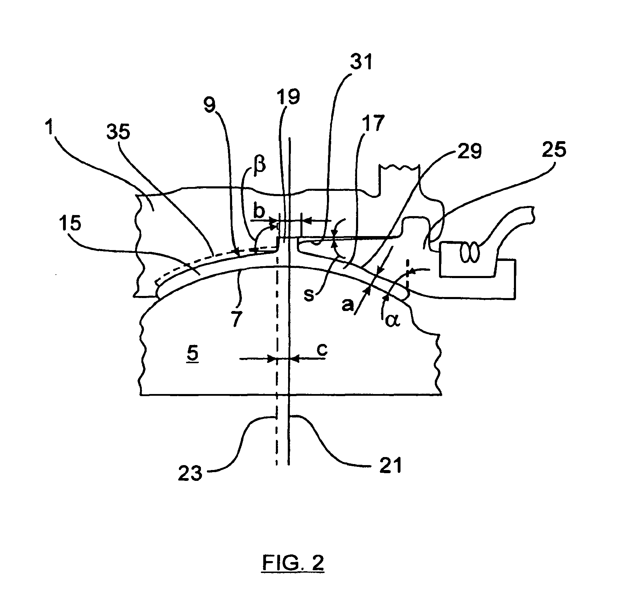

Wie aus der **Fig. 1** sowie aus der vergrößerten Darstellung der **Fig. 2** hervorgeht, ist die Lagerschale 9 materialeinheitlich und einstückig mit einer gleichmäßig dünnen Wand- bzw. Materialstärke a in einer Größenordnung von 1 - 3 mm gebildet. Die Lagerschale 9 ist ringförmig mit einer Ausbauchung ausgeführt, die der Form des Kugelabschnitts 7 der Lagerbuchse 5 folgt. Die Lagerschale 9 besteht in Axialrichtung aus zwei Schalenhälften 15 und 17 sowie einem in etwa axial mittig angeformten Halteflansch 19. Dieser weist eine Materialstärke b auf, die in etwa der Materialstärke a der Schalenhälften 15, 17 entspricht, und erstreckt sich ringförmig um die Außenseite der Lagerschale 9. Dabei ist der Halteflansch 19 mit seiner Mittelachse 21 geringfügig über ein Versatzmaß c von der Querachse 23 der Lagerschale 9 versetzt.

Gemäß den Figuren sitzt die Lagerbuchse 5 über die eine Schalenhälfte 15 der Lagerschale unmittelbar auf dem Lagersitz 16 des Gelenkgehäuses 1. Zur verdrehsicheren Halterung der Lagerschale 9 in dem Gelenkgehäuse 1 ist stirnseitig ein im Querschnitt keilförmiger Verschlussring 25 in das Gelenkgehäuse 1 eingepresst. Der keilförmige Verschlussring 25 drückt mit seiner Spitze den Halteflansch 19 gegen einen gehäuseseitigen Ringanschlag 27. Außerdem ist der Verschlussring 25 mit seinen gegenüberliegenden Keilflächen 29, 31 zwischen einer Gelenkgehäuse-Innenwandung und der Schalenhälfte 17 der Lagerschale 9 verspannt. Dabei ist die Geometrie der Gelenkgehäuse-Innenwandung und der gegenüberliegenden Keilfläche 31 des Verschlussringes 25 geometrisch derart ausgeführt, dass nach dem Zusammenbau ein geringfügiger keilförmiger Ausgleichsspalt s verbleibt, wie er in der **Fig. 2** übertrieben dargestellt ist. Durch den Ausgleichsspalt s kann sich die Gelenkgehäuse-Innenwandung unter Abbau eines Anpressdruckes, der etwa beim Einpressen des Gelenkgehäuses 3 in den Radträger 3 aufgebaut wird, elastisch verstellen.

Der Verschlussring 25 ist mit seinem aus dem Gelenkgehäuse 1 ragenden Ende auf herkömmliche Weise mittels eines Dichtbalgs 33 mit der Lagerbuchse 5 gekoppelt. Ein weiterer Dichtbalg 33 ist auch auf der axial gegenüberliegenden Seite zwischen der Lagerbuchse 5 und dem Gelenkgehäuse 1 vorgesehen.

Bei einer im Gegensatz zur Erfindung erfolgenden stirnseitigen Anformung des Halteflansches 19 an der Lagerschale 9 würde sich zwangsläufig ein spitzwinkliger Hinterschnitt zwischen dem sich in Quer- bzw. Radialrichtung erstreckenden Halteflansch 19 und der kugelförmigen Außenfläche der Lagerschale 9 ergeben, wie er mit dem Hinterschneidungswinkel a von etwa 60° in der **Fig. 2** angedeutet ist. Aufgrund eines solchen spitzwinkligen Hinterschnitts könnte nur in konstruktiv aufwendiger Weise vom Verschlussring 25 eine Klemmkraft auf den Halteflansch 19 funktionssicher aufgebracht werden.

Der oben genannte nachteilige spitzwinklige Hinterschneidungswinkel α zwischen dem Halteflansch 19 und der Lagerschale 9 ist durch die, erfindungsgemäß stirnseitig versetzte Lage des Halteflansches 19 an der Lagerschale 9 reduziert. Im Falle der axial mittigen Anordnung des Halteflansches 19 an der Lagerschale 9, wird ein solcher spitzwinkliger Hinterschnitt vollständig verhindert. Vielmehr liegt erfindungsgemäß der Hinterschneidungswinkel β gemäß der **Fig. 2** in einer Größenordnung von 90°. Der Halteflansch 19 kann somit mittels des Verschlussrings konstruktiv einfach gegen den Ringanschlag 27 des Gehäuses 1 gepresst werden.

Aufgrund der gleichmäßig dünnen Materialstärke a der Lagerschale 9 können beim Herstellungsprozess des Hülsengelenks in einfacher Weise Schmierrinnen bzw. Schmiertaschen erzeugt werden, die eine Gleitbewegung zwischen dem Kugelabschnitt 7 der Lagerbuchse 5 und der Lagerschale 9 unterstützen.

Hierzu werden während des Fertigungsvorgang Axialnuten und/oder Längsnuten 35 in den Lagersitz 16 des Gelenkgehäuses 1 umfangsseitig verteilt eingebracht. Während einer nachfolgenden Wärmebehandlung im zusammengebauten Zustand des Gelenks tritt das wärmebedingt erweichende Kunststoffmaterial der Lagerschale 9 in die Längsnuten 35 ein. Dieser "Materialschwund" bildet sich aufgrund der geringen Materialstärke a auf der gegenüber liegenden Lagerschalen-Innenseite als nutenförmige Vertiefungen nach, die entsprechend als Schmierrinnen bzw. Schmiertaschen dienen können.

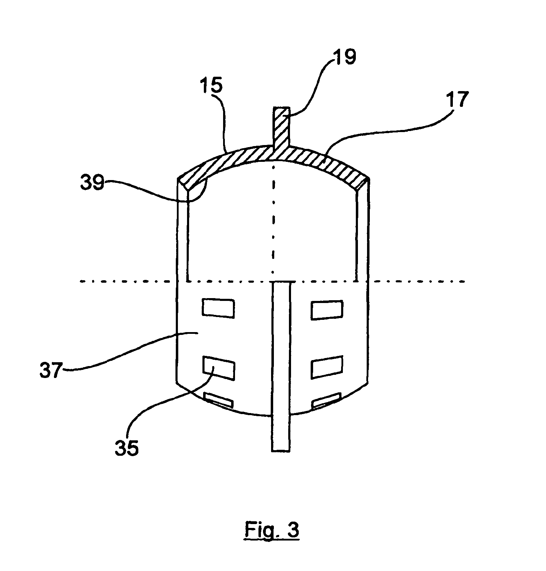

In der **Fig. 3** ist eine Lagerschale 9 gemäß dem zweiten Ausführungsbeispiel in Alleinstellung gezeigt. Die Lagerschale 9 ist grundsätzlich baugleich mit der in den **Fig. 1** **und** **2** gezeigten Lagerschale 9. Im Unterschied zur Lagerschale des ersten Ausführungsbeispiels sind die Vertiefungen 35 jedoch nicht in den gehäuseseitigen Lagersitz 16 ausgebildet, sondern unmittelbar an der Lagerschalenaußenseite 37. Die Vertiefungen sind in der **Fig. 3** in Radialrichtung hintereinander umlaufend angeordnet. Es erstreckt sich zu beiden Seiten des Halteflansches 19 jeweils eine Reihe von Vertiefungen 35.

Die in der **Fig. 3** gezeigten Reihen von Vertiefungen 35 sind lediglich beispielhaft. Alternativ hierzu können die Vertiefungen 35 in Radialund/oder Axialrichtung versetzt zueinander angeordnet sein.

Die außenseitigen Vertiefungen 35 bilden vor einem Temper-Prozess zusammen mit der Kontaktfläche des gehäuseseitigen Lagersitzes 16 und des Verschlussrings 25 Hohlräume.

Nach dem Zusammenbau der Gelenk- und/oder Lageranordnung und dem anschließenden Temper-Prozess kann Kunststoffmaterial der Lagerschale 9 zumindest teilweise unter Bildung korrespondierender Schmierrinnen bzw. Schmiertaschen auf der Lagerschalen-Innenseite 39 in diese Hohlräume fließen. Die dadurch auf der Lagerschalen-Innenseite 39 gebildeten Schmiertaschen zeichnen sich insbesondere durch weiche Übergänge aus, ohne dass die Lagerschalen-Innenseite 39 zusätzlich mit Werkzeug zu bearbeiten ist.

Bei der in der **Fig. 3** gezeigten Lagerschale 9 können die Vertiefungen 35 an der Lagerschalen-Außenseite 37 beispielweise während eines Gießvorganges - ohne zusätzlichem Werkzeugaufwand - kostengünstig vorgesehen werden. Eine zusätzliche Bearbeitung des gehäusefesten Lagersitzes, d. h. ein Fräsen von Längsnuten, kann auf diese Weise vermieden werden.

## Patentansprüche

1. Gelenk- und/oder Lageranordnung, insbesondere Hülsengelenk zur Anbindung von Radführungselementen (3) eines Kraftfahrzeugs, mit einer Lagerinnenteil (5), das außenseitig kugelförmig gekrümmt ist und über eine Lagerschale (9) gleitbeweglich in einem Gelenkgehäuse (1) gelagert ist, welche Lagerschale (9) zumindest teilweise auf einem gehäuseseitigen Lagersitz (16) abgestützt ist, wobei in dem gehäuseseitigen Lagersitz (16) der Lagerschale und/oder in der Lagerschalen-Außenseite (37) Vertiefungen (35) vorgesehen sind, wobei die Lagerschale (9) zumindest teilweise von einem zwischen dem Gelenkgehäuse (1) und der Lagerschale (9) angeordneten Verschlussring (25) überdeckt ist, und der Verschlussring (25) im Querschnitt keilförmig ist, **dadurch gekennzeichnet, dass** der keilförmige Verschlussring (25) mit einer ersten Keilfläche (29) gegen die Lagerschale (9) drückt, und mit einer zweiten Keilfläche (31) unter Bildung eines geringfügigen Ausgleichsspalts (s) gegen das Gehäuse (1) drückt.

2. Gelenk- und/oder Lageranordnung nach Anspruch 1, **dadurch gekennzeichnet, dass** in die Vertiefungen (35) des Lagersitzes (16) Kunststoffmaterial der Lagerschale (9) unter Bildung korrespondierender Schmiertaschen oder -rinnen auf der, dem Lagerinnenteil (5) zugewandten Seite (39) der Lagerschale (9) ragt.

3. Gelenk- und/oder Lageranordnung nach Anspruch 1 oder 2, **dadurch gekennzeichnet, dass** das Kunststoffmaterial der Lagerschale (9) bei einer herstellungsbedingten Wärmebehandlung des Gelenk- und/oder Lageranordnung unter Bildung der korrespondierenden Schmiertaschen oder -rinnen auf der Lagerschalen-Innenseite (39) in die Vertiefungen (35) an der Lagerschalen-Außenseite eintritt.

4. Gelenk- und/oder Lageranordnung nach einem der Ansprüche 2 oder 3, **dadurch gekennzeichnet, dass** die Vertiefungen (35) Axialnuten sind, die einen Schmiermittel-Transport in Axial- bzw. Längsrichtung unterstützen.

5. Gelenk- und/oder Lageranordnung nach einem der Ansprüche 2 oder 3, **dadurch gekennzeichnet, dass** die Vertiefungen (35) Radialnuten sind, die einen Schmiermittel-Transport in Radialrichtung unterstützen.

6. Gelenk- und/oder Lageranordnung nach einem der vorhergehenden Ansprüche, **dadurch gekennzeichnet, dass** die Vertiefungen (35) taschenartig ausgeführt sind.

7. Gelenk- und/oder Lageranordnung nach einem der vorhergehenden Ansprüche, **dadurch gekennzeichnet, dass** zur Abstützung der Lagerschale (9) im Gelenkgehäuse (1) eine Lagerschalenhälfte (17) vom Verschlussring (25) überdeckt ist und die andere Lagerschalenhälfte (15) auf einem gehäuseseitigen Lagersitz (16) sitzt.

8. Gelenk- und/oder Lageranordnung nach einem der vorhergehenden Ansprüchen, **dadurch gekennzeichnet, dass** die ringförmige Lagerschale (9) mit gleichmäßiger Materialstärke (a) ausgebildet ist.

9. Gelenk- und/oder Lageranordnung nach einem der vorhergehenden Ansprüche, **dadurch gekennzeichnet, dass** die Lagerschale (9) einen auβenseitig umlaufenden Halteflansch (19) aufweist, der zur Halterung der Lagerschale (9) zwischen einem gehäuseseitigen Ringanschlag (27) und dem Verschlussring (25) geklemmt ist.

10. Gelenk- und/oder Lageranordnung nach Anspruch 9, **dadurch gekennzeichnet, dass** der Halteflansch (19) der Lagerschale (9) im Wesentlichen mit gleicher Materialstärke (a) wie die Lagerschale (9) ausgebildet ist.

11. Gelenk- und/oder Lageranordnung nach einem der Ansprüche 9 oder 10, **dadurch gekennzeichnet, dass** der Halteflansch (19) im Wesentlichen axial mittig an der Lagerschale (9) angeordnet ist und in die beiden Lagerschalenhälften (15, 17) übergeht.

12. Gelenk- und/oder Lageranordnung nach einem der Ansprüche 9 bis 11, **dadurch gekennzeichnet, dass** ein Hinterschneidungswinkel (β) zwischen dem Halteflansch (19) und der Außenseite der Lagerschale (9) in einer Größenordnung von 90° liegt.

13. Gelenk- und/oder Lageranordnung nach einem der vorhergehenden Ansprüche, **dadurch gekennzeichnet, dass** der Verschlussring (25) auβenseitig auf eine Lagerschalenhälfte (17) drückt.

## Claims

1. Joint and/or bearing arrangement, in particular sleeve joint for the connection of wheel control elements (3) of a motor vehicle, having a bearing inner part (5) which is of spherically curved design on the outside and which, via a bearing shell (9), is mounted in a slidingly movable manner in a joint housing (1), which bearing shell (9) is supported at least partially on a bearing seat (16) on the housing, wherein depressions (35) are provided in the bearing seat (16) on the housing for the bearing shell and/or in the outside (37) of the bearing shell, wherein the bearing shell (9) is at least partially covered by a locking ring (25) arranged between the joint housing (1) and the bearing shell (9), and the locking ring (25) is wedge-shaped in cross section, **characterized in that** the wedge-shaped locking ring (25) presses with a first wedge surface (29) against the bearing shell (9) and with a second wedge surface (31), so as to form a small compensating gap (s), against the housing (1) .

2. Joint and/or bearing arrangement according to Claim 1, **characterized in that** plastic material of the bearing shell (9) projects into the depressions (35) of the bearing seat (16) so as to from corresponding lubricating pockets or channels on that side (39) of the bearing shell (9) which faces towards the bearing inner part (5).

3. Joint and/or bearing arrangement according to Claim 1 or 2, **characterized in that** the plastic material of the bearing shell (9) enters into the depressions (35) on the outside of the bearing shell, so as to form the corresponding lubricating pockets or channels on the inside (39) of the bearing shell, during the course of a heat treatment of the joint and/or bearing arrangement during manufacture.

4. Joint and/or bearing arrangement according to either of Claims 2 and 3, **characterized in that** the depressions (35) are axial grooves which assist the transportation of lubricant in the axial or longitudinal direction.

5. Joint and/or bearing arrangement according to either of Claims 2 and 3, **characterized in that** the depressions (35) are radial grooves which assist the transportation of lubricant in the radial direction.

6. Joint and/or bearing arrangement according to one of the preceding claims, **characterized in that** the depressions (35) are formed in the manner of pockets.

7. Joint and/or bearing arrangement according to one of the preceding claims, **characterized in that**, for the support of the bearing shell (9) in the joint housing (1), one bearing shell half (17) is covered by the locking ring (25) and the other bearing shell half (15) is seated on a bearing seat (16) on the housing.

8. Joint and/or bearing arrangement according to one of the preceding claims, **characterized in that** the annular bearing shell (9) is formed with a uniform material thickness (a).

9. Joint and/or bearing arrangement according to one of the preceding claims, **characterized in that** the bearing shell (9) has an externally encircling retaining flange (19) which, for the retention of the bearing shell (9), is clamped between an annular stop (27) on the housing and the locking ring (25).

10. Joint and/or bearing arrangement according to Claim 9, **characterized in that** the retaining flange (19) of the bearing shell (9) is formed substantially with the same material thickness (a) as the bearing shell (9).

11. Joint and/or bearing arrangement according to either of Claims 9 and 10, **characterized in that** the retaining flange (19) is arranged substantially axially centrally on the bearing shell (9) and merges into the two bearing shell halves (15, 17).

12. Joint and/or bearing arrangement according to one of Claims 9 to 11, **characterized in that** an undercut angle (β) between the retaining flange (19) and the outside of the bearing shell (9) is of the order of magnitude of 90°.

13. Joint and/or bearing arrangement according to one of the preceding claims, **characterized in that** the locking ring (25) presses against the outside of one bearing shell half (17).

## Revendications

1. Agencement d'articulation et/ou de palier, en particulier articulation à douille destinée à relier des éléments de guidage de roue (3) d'un véhicule automobile, comprenant une partie interne de palier (5) qui est courbée de manière sphérique du côté extérieur, et qui est supportée par le biais d'une coque de palier (9) de manière déplaçable par glissement dans un boîtier d'articulation (1), laquelle coque de palier (9) est supportée au moins en partie sur un siège de palier (16) du côté du boîtier, des renfoncements (35) étant prévus dans le siège de palier (16) de la coque de palier, du côté du boîtier, et/ou dans le côté extérieur (37) de la coque de palier, la coque de palier (9) étant recouverte au moins en partie par une bague de fermeture (25) disposée entre le boîtier d'articulation (1) et la coque de palier (9), et la bague de fermeture (25) ayant une forme de clavette en section transversale, **caractérisé en ce que** la bague de fermeture (25) en forme de clavette presse avec une première surface de clavette (29) contre la coque de palier (9), et presse avec une deuxième surface de clavette (31) contre le boîtier (1) en formant une petite fente de compensation (s).

2. Agencement d'articulation et/ou de palier selon la revendication 1, **caractérisé en ce que** la matière plastique de la coque de palier (9) pénètre dans les renfoncements (35) du siège de palier (16) en formant des cavités ou des gorges de lubrification correspondantes, sur le côté (39) de la coque de palier (9) tourné vers la partie interne de palier (5).

3. Agencement d'articulation et/ou de palier selon la revendication 1 ou 2, **caractérisé en ce que** la matière plastique de la coque de palier (9), lors d'un traitement thermique de fabrication de l'agencement d'articulation et/ou de palier, pénètre dans les renfoncements (35) du côté extérieur de la coque de palier en formant les cavités ou les gorges de lubrification correspondantes du côté interne (39) de la coque de palier.

4. Agencement d'articulation et/ou de palier selon l'une quelconque des revendications 2 ou 3, **caractérisé en ce que** les renfoncements (35) sont des rainures axiales qui favorisent un transport de lubrifiant dans la direction axiale ou longitudinale.

5. Agencement d'articulation et/ou de palier selon l'une quelconque des revendications 2 ou 3, **caractérisé en ce que** les renfoncements (35) sont des rainures radiales qui favorisent un transport de lubrifiant dans la direction radiale.

6. Agencement d'articulation et/ou de palier selon l'une quelconque des revendications précédentes, **caractérisé en ce que** les renfoncements (35) sont réalisés sous forme de cavités.

7. Agencement d'articulation et/ou de palier selon l'une quelconque des revendications précédentes, **caractérisé en ce que** pour le support de la coque de palier (9) dans le boîtier d'articulation (1), une moitié de coque de palier (17) est recouverte par la bague de fermeture (25) et l'autre moitié de la coque de palier (15) repose sur un siège de palier (16) du côté du boîtier.

8. Agencement d'articulation et/ou de palier selon l'une quelconque des revendications précédentes, **caractérisé en ce que** la coque de palier annulaire (9) est réalisée avec une épaisseur de matériau (a) uniforme.

9. Agencement d'articulation et/ou de palier selon l'une quelconque des revendications précédentes, **caractérisé en ce que** la coque de palier (9) présente une bride de retenue (19) périphérique du côté extérieur, qui est serrée pour retenir la coque de palier (9) entre une butée annulaire (27) du côté du boîtier et la bague de fermeture (25).

10. Agencement d'articulation et/ou de palier selon la revendication 9, **caractérisé en ce que** la bride de retenue (19) de la coque de palier (9) est réalisée sensiblement avec la même épaisseur de matériau (a) que la coque de palier (9).

11. Agencement d'articulation et/ou de palier selon l'une quelconque des revendications 9 ou 10, **caractérisé en ce que** la bride de retenue (19) est disposée essentiellement centralement axialement sur la coque de palier (9), et se prolonge en les deux moitiés de coque de palier (15, 17).

12. Agencement d'articulation et/ou de palier selon l'une quelconque des revendications 9 à 11, **caractérisé en ce qu'**un angle de contre-dépouille (β) entre la bride de retenue (19) et le côté extérieur de la coque de palier (9) est de l'ordre de 90°.

13. Agencement d'articulation et/ou de palier selon l'une quelconque des revendications précédentes, **caractérisé en ce que** la bague de fermeture (25) presse du côté extérieur sur une moitié de coque de palier (17).
